# EUROPÄISCHE PATENTSCHRIFT

(11) **EP 1 961 289 B1**
(45) Veröffentlichungstag und Bekanntmachung des Hinweises auf die Patenterteilung: **31.03.2010**
(21) Anmeldenummer: 07122810.0
(22) Anmeldetag: 11.12.2007
(51) Int. Cl.: A01D 61/00, A01F 12/30

(54) **Landwirtschaftliche Arbeitsmaschine**
Agricultural working machine
Machine de travail agricole

(30) Priorität: 22.02.2007 DE 102007009313
(43) Veröffentlichungstag der Anmeldung: 27.08.2008
(73) Patentinhaber: CLAAS Selbstfahrende Erntemaschinen GmbH, 33428 Harsewinkel (DE)
(72) Erfinder: Fögeling, Walter, 33442, Herzebrock-Clarholz (DE); Bellmann, Reiner, 33428, Harsewinkel (DE); Bühlmeier, Robert, 33442, Herzebrock-Clarholz (DE)

(56) Entgegenhaltungen:
- EP-A- 1 609 353
- US-A- 2 849 103

## Beschreibung

Die vorliegende Erfindung bezieht sich allgemein auf das Gebiet der Landwirtschaft und der Verarbeitung von Ernteerzeugnissen. Hierzu werden Fahrzeuge, insbesondere landwirtschaftliche Arbeitsmaschinen, welche zur Aufnahme der Ernte und zur Verarbeitung des Gutes dienen, eingesetzt. Bei den hier in Rede stehenden selbstfahrenden Landmaschinen handelt es sich in der Regel um Mähdrescher, die mit Einrichtungen zur Verarbeitung und Vorrichtungen zur Förderung des Erntegutes ausgestattet sind. Zur Verarbeitung des Erntegutes, welches aus einem Gemisch von Kornmaterial und Nichtkornanteilen besteht, werden beispielsweise Einrichtungen, wie etwa Hordenschüttler, zum Trennen der unterschiedlichen Bestandteile des Erntegutes eingesetzt Den Hordenschüttlern sind obenseitig regelmäßig als Rotationskörper ausgeführte sogenannte Schüttlerhilfen zugeordnet, die nicht nur den Transport des Gutstromes, sondern auch dessen aktive und intensive Auflockerung bewirken, In der Regel ist eine solche Fördervorrichtung nach der Dreschvorrichtung angeordnet und befindet sich oberhalb der Trenneinrichtung, wobei auch mehrere Fördervorrichtungen oberhalb der als Hordenschüttler ausgeführten Trenneinrichtung angeordnet sein können, die je nach Anordnung, sowohl ober- wie unterschlächtig arbeiten.

Solche selbstfahrenden Landmaschinen, insbesondere Mähdrescher mit einer Fördervorrichtung zum Transportieren und Auflockern pflanzlicher Bestandteile, wobei die Fördervorrichtung einen Rotationskörper mit einer im wesentlichen geschlossenen Mantelfläche, wenigstens einen Mitnehmer und wenigstens ein Abstreifelement aufweist, wobei wenigstens ein Mitnehmer im Inneren des Rotationskörpers gegenüber dessen Rotationsachse exzentrisch und drehbar gelagert ist und sich radial beweglich durch eine Mitnehmerführung erstreckt, die an der Mantelfläche angebracht ist, sind aus dem Stand der Technik, beispielsweise der EP 1 050 206 B1 und der EP 0 933 017 A1, bekannt. Diesem Stand der Technik ist zu entnehmen, dass die Rotationskörper einerseits zur Förderung des Gutstromes und andererseits zum Auflockern des Gutstromes, mit verschiedenen Elementen ausgestattet sind, um den Gutstrom über die Trenneinrichtung zu fördern und eine zusätzliche Abscheidung von Restkörnern zu erreichen, Die Elemente sind im und/oder am Rotationskörper angeordnet und bestehen beispielsweise aus beweglichen Mitnehmern, auch Förderzinken genannt, und Abstreifelementen, die auf der Manteloberfläche befestigt sind.

Die in den beiden vorgenannten Dokumente offenbarten Rotationsförderer besitzen aber den nicht unerheblichen Nachteil, dass sich um die beweglich und exzentrisch angeordneten Mitnehmer, und dadurch bedingt um die Mantelfläche des Rotationskörpers, Fördergut wickeln kann, wodurch die Fördervorrichtung das Fördergut nicht mehr restlos abgibt und sich ein Verklemmen des Fördergutes über der gesamten Mantelfläche des Rotationskörpers einstellen, kann. Dieser Vorgang führt in kürzester Zeit dazu, dass eine um den Rotationskörper sich aufwickelnde Schicht aus Fördergut den Stillstand der Maschine erfordert.

Weitere Nachteile der Fördervorrichtung aus der EP 1050 206 61 bestehen darin, dass die an den Mitnehmerdurchführungen angeordneten Abstreifbleche mit Langlöchern versehen sind, in welchen sich im Einlaufbereich Fördergut verhaken kann. Um diesen Nachteil zu reduzieren sind die Langlöcher wesentlich breiter ausgelegt, als der Durchmesser (die Starke) der Mitnehmer, wodurch aber der Abstreifvorgang des Fördergutes, vom Mitnehmer, wiederum verschlechtert wird.

Der Erfindung liegt daher die Aufgabe zugrunde, eine Fördervorrichtung der eingangs genannten Art zu schaffen, welche die genannten Nachteile der aus dem Stand der Technik bekannten Anordnungen vermeidet und eine technische Lösung anzugeben, die es ermöglicht, eine kostengünstigere und mit einfacher Funktionsgeometrie ausgestattete Vorrichtung herzustellen, die eine wesentlich geringere Wickelneigung aufweist.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Indem der als Mähdrescher ausgeführten landwirtschaftlichen Arbeitsmaschine eine Fördervorrichtung zum Transportieren und Auflockern pflanzlicher Bestandteile zugeordnet ist und wobei die Fördervorrichtung einen Rotationskörper mit einer im wesentlichen geschlossenen Mantelfläche, wenigstens einen Mitnehmer und wenigstens ein Abstreifelement aufweist, wobei wenigstens ein Mitnehmer im Inneren des Rotationskörpers gegenüber dessen Rotationsachse exzentrisch und drehbar gelagert ist und sich radial beweglich durch eine Mitnehmerführung erstreckt, die an der Mantelfläche angebracht und der Querschnitt des dünnwandigen Hohlkörpers der Fördervorrichtung sternförmig ausgebildet ist wird sichergestellt, dass die Fördervorrichtung kostengünstig und mit einfacher Funktionsgeometrie herstellbar ist und eine wesentlich geringere Wickelneigung aufweist. Diese Effekte werden insbesondere dadurch bewirkt, dass nunmehr die Mitnehmer und die diesen zugeordneten Abstreifer im sogenannten Windschatten der jeweiligen sternförmigen Erhebungen angeordnet sind.

In einer vorteilhaften Ausgestaltung der Erfindung wird der im Querschnitt sternförmige dünnwandige Hohlkörper von einer Vielzahl zueinander versetzt angeordneter ebener Umfangsflächen gebildet und wobei benachbarte Umfangsflächen durch ebene Radialstege miteinander verbunden sind. Eine derartige Ausführung ist konstruktiv einfach gestaltet und damit letztlich mit geringem Herstellungsaufwand kostengünstig zu fertigen,

In einer weiteren vorteilhaften Ausgestaltung der Erfindung sind die ebenen Radialstege nahezu senkrecht mit zumindest einer benachbarten ebenen Unfangsfläche verbunden, sodass sich zwischen ebener Umfangsfläche und dem jeweiligen. Radialsteg ein tiefer Ausschnitt ergibt, in welchen die Mitnehmerführung wickelneigungsarm integriert werden kann.

In einer vorteilhaften Ausgestaltung der Erfindung wird eine weitere Reduzierung des Fertigungsaufwandes dann erreicht, wenn die ebenen Umfangsflächen und die Radialstege rechteckig ausgebildet sind und jeweils die Umfangsflächen und die Radialstege gleich groß sind.

In bewährter Weise sind in die sich ergebende Umfangsfläche des dünnwandigen Hohlkörpers der Fördervorrichtung in einer vorteilhaften Ausgestaltung der Erfindung Öffnungen zum Durchtritt der Mitnehmer eingelassen. Eine Vereinfachung der Herstellung dieser Öffnungen ergibt sich in vorteilhafter Weiterbildung dann, wenn die Öffnungen jeweils in einer Reihe in die Umfangsfläche eingelassen sind.

Eine erhebliche Reduzierung der Wickelneigung und des Verstopfens der Öffnungen zum Durchtritt der Mitnehmer wird in einer weiteren vorteilhaften Ausgestaltung der Erfindung dann erreicht, wenn auf der jeweiligen Umfangsfläche wenigstens eine Mitnehmerführung im Bereich zwischen dem benachbarten und nahezu senkrecht angeordneten Radialsteg und der Öffnung angeordnet ist und sich die Mitnehmerführung vom Radialsteg über die Öffnung hinweg erstreckt.

Indem die Mitnehmerführung eine bogenförmige Außenkontur aufweist wird zudem sichergestellt, dass sich zwischen dem die Mitnehmerführung durchsetzenden Mitnehmer und dieser Außenkontur stets ein Öffnungswinkel ergibt, der größer ist als der Reibwinkel zwischen dem Mitnehmermaterial und dem zu fördernden Gut. Dies führt insbesondere dazu, dass das von dem Mitnehmern geförderte Gut beim Hineinbewegen der Mitnehmer in den dünnwandigen Hohlkörper das geförderte Erntegut nahezu vollständig an der Mitnehmerführung abgestriffen wird. Dieser Effekt wird insbesondere dadurch erreicht, dass in einer vorteilhaften Ausgestaltung der Erfindung die bogenförmige Außenkontur so beschaffen ist, dass sich im Einlaufbereich in Drehrichtung der Fördervorrichtung zwischen Mitnehmer und bogenförmiger Außenkontur ein Abstreifwinkel α ergibt, der einen freien Abfluss des Erntegutes ermöglicht. In analoger Weise wird dieser Effekt unterstützt, wenn die bogenförmige Außenkontur so beschaffen ist, dass sich im Austrittsbereich in Drehrichtung der Fördervorrichtung zwischen Mitnehmer und der bogenförmigen Außenkontur ein Abstreifwinkel β ergibt, der einen freien Abfluss des Erntegutes ermöglicht.

Eine präzise Abgabe des Erntegutes beim Eintreten der Mitnehmer in den dünnwandigen Hohlkörper wird auch dadurch unterstützt, wenn in einer vorteilhaften Ausgestaltung der Erfindung die Umfangsfläche mit dem ihr zugeordneten Radialsteg eine sternförmige Erweiterung bildet in dessen Eckpunkt zwischen Mitnehmerführung und vorauseilender Umfangsfläche eine Abstreifkante verläuft.

Eine konstruktiv einfache Umsetzung der Führung des Mitnehmers in der Mitnehmerführung wird dann erreicht, wenn die Mitnehmerführung von einer Ausnehmung zur Führung eines Mitnehmers durchsetzt wird,

In einer vorteilhaften Ausgestaltung der Erfindung wird die Wickel- und Verstopfungsneigung der Fördervorrichtung auch dadurch weiter eingeschränkt, wenn die Grund- und Deckfläche des sternförmigen dünnwandigen Hohlkörpers jeweils mit einer kreisförmigen Scheibe verschlossen ist. Dieser Effekt kann auch dadurch noch intensiviert werden, wenn die kreisförmige Scheibe im Durchmesser mit den außen liegenden Eckpunkten korrespondiert.

Ein konkretes Ausführungsbeispiel der Erfindung, ist in den Zeichnungen, anhand eines Achtecksterns, rein schematisch dargestellt und wird nachfolgend näher beschrieben. Es zeigt:
- Fig. 1: einen schematischen Längsschnitt durch eine landwirtschaftliche Arbeitsmaschine mit einer darin enthaltenen erfindungsgemäßen Fördervorrichtung zum Transportieren und Auflockern des Fördergutes und
- Fig. 2: eine Fördervorrichtung in perspektivischer Darstellung und
- Fig. 3: eine Ansicht des sternförmigen Hohlkörpers im Querschnitt.

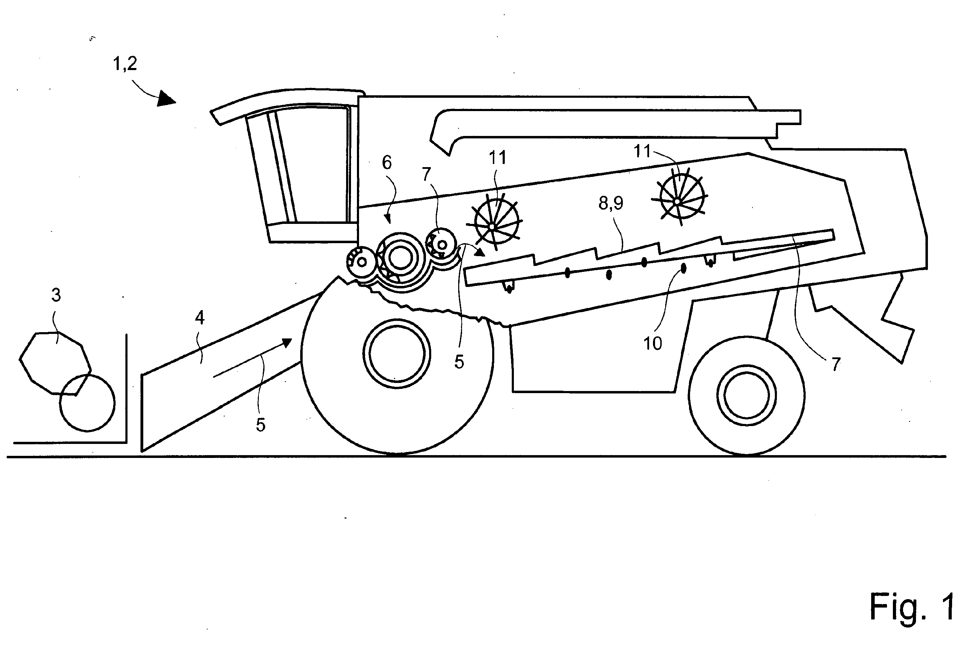

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist, Der den Schrägförderer 4 durchlaufende Erntegutstrorn 5 wird in dem obenseitigen, rückwärtigen Bereich des Schrägförderers 4 an die Dreschorgane 6 des Mähdreschers 2 übergeben. Eine den Dreschorganen 6 nachgeordnete Umlenktrommel 7 lenkt den im rückwärtigen Bereich der Dreschorgane 6 aus diesen austretenden Gutstrom 5 so um, dass er unmittelbar an eine als Hordenschüttler 8 ausgeführte Trenneinrichtung 9 übergeben wird, Auf dem rotierenden Hordenschüttler 8 wird der Gutstrom 5 so gefördert, dass in dem Gutstrom enthaltene freibewegliche Körner 10 im untenseitigen Bereich des Hordenschüttlers 8 abgeschieden und weiteren, an sich bekannten und deshalb nicht dargestellten Arbeitsorganen, wie etwa einer Reinigungseinrichtung, zugeführt werden. Zur Verbesserung des Trenneffekts sind dem Hordenschüttler 8 obenseitig eine erfindungsgemäße und noch näher zu beschreibende vordere Fördervorrichtung 11 und eine dieser nachgeordnete erfindungsgemäße hintere Fördervorrichtung 11 zugeordnet.

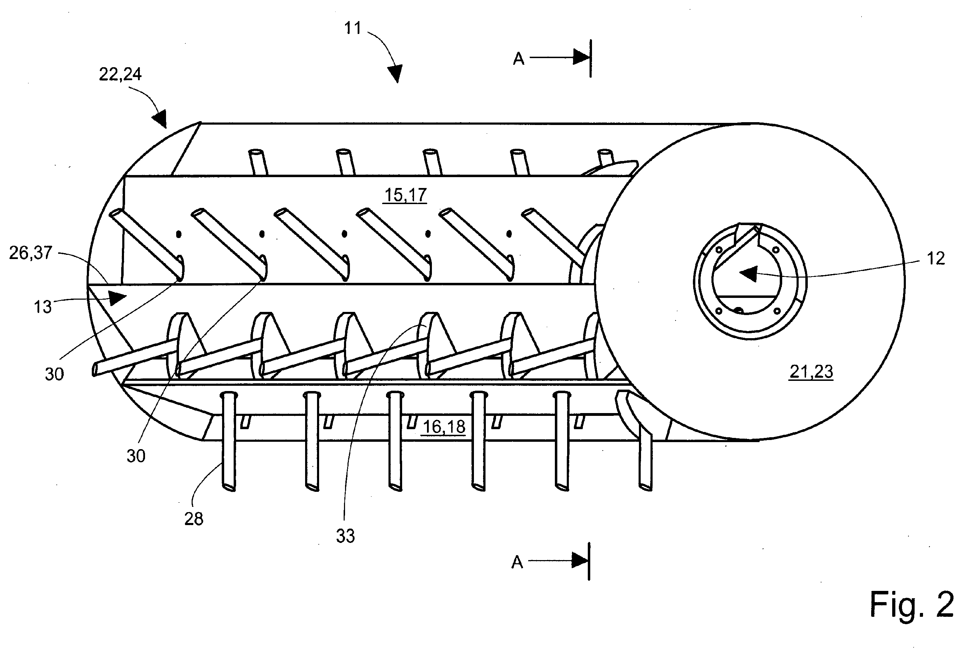

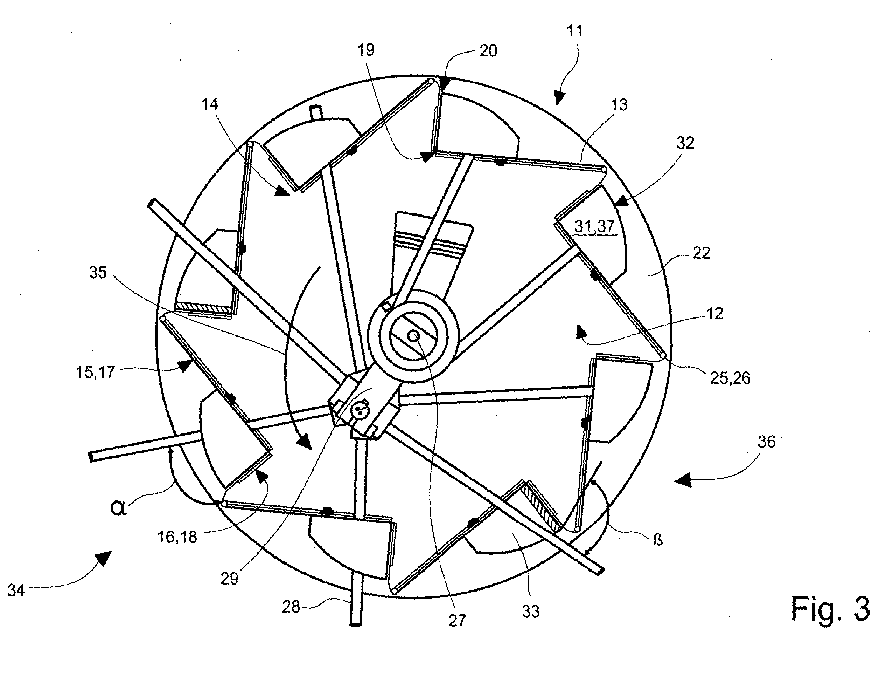

In Fig.2 ist die erfindungsgemäße Fördervorrichtung 11 in perspektivischer Darstellung und in Fig. 3 in einer Querschnittsdarstellung abgebildet, wobei sich die nachfolgende Beschreibung stets sowohl auf die Fig, 2 als auch die Fig. 3 bezieht Die Fördervorrichtung 11 umfasst einen sternförmigen Hohlkörper 12, dessen sternförmig ausgebildete Mantelfläche 13 im Querschnitt acht die Sternform begründende zackenförmige Erweiterungen 14 aufweist.

Im dargestellten Ausführungsbeispiel setzt sich die sternförmige Mantelfläche 13 aus sechzehn aneinander gereihten, noch näher zu beschreibenden Rechteckflächen 15, 16 zusammen, Die im wesentlichen die Mantelfläche 13 der Fördervorrichtung 11 bildenden Rechteckflächen 15 werden nachfolgend erfindungsgemäß als ebene Umfangsflächen 17 bezeichnet. Die nahezu radial verlaufenden weiteren Rechteckflächen 16 werden nachfolgend erfindungsgemäß als Radialstege 18 bezeichnet. Die Mantelfläche 13 der Fördervorrichtung 11 setzt sich aus der abwechselnden Anordnung einer ebenen Umfangsftache 17 und eines Radialsteges 18 zusammen, Dabei steht jeder Radialsteg 18 mit seinem radial weiter innen liegenden Ende 19 nahezu senkrecht auf der diesem am innen liegenden Ende zugeordneten ebenen Umfangsfläche 17. Das radial weiter außen liegende Ende 20 des jeweiligen Radialsteges 18 schließt mit der ihm zugeordneten ebenen Umfangsfläche 17 einen derartigen, vorzugsweise spitzen Winkel ein, dass sich letztlich die Sternenform des Hohlkörpers 12 ergibt. Es liegt im Rahmen der Erfindung, dass jeweils ein Radialsteg 18 und eine ebene Umfangsfläche 17 oder mehrere dieser Elemente vorgefertigt und schließlich zu dem erfindungsgemäßen Hohlkörper 12 zusammengefügt, etwa geschweißt oder verschraubt werden.

Die Mantelfläche 13 des sternförmigen Hohlkörpers 12 ist an ihren Enden durch eine Grundfläche 21 und eine dazu kongruente und parallele Deckfläche 22 begrenzt, wobei die Grundfläche 21 und die Deckfläche 22 jeweils durch eine kreisförmige Scheibe 23, 24 verschlossen werden. Der Durchmesser der kreisförmigen Scheiben 23, 24 korrespondiert mit den außen liegenden, die radial weiter außen liegende Verbindung zwischen benachbarten Radialstegen 18 und ebenen Umfangsflächen 17 bildenden Eckpunkten 25, die in Längsrichtung der jeweiligen Umfangsfläche 17 betrachtet, jeweils eine Abstreifkante 26 an der Mantelfläche 13 bilden, wobei die Abstreifkante 26 zugleich Bestandteil des erfindungsgemäßen Abstreifelementes 37 sein kann. Die kreisförmigen Scheiben 23, 24 an den Enden des Hohlkörpers 12 dienen einerseits zum seitlichen Verschließen des Hohlkörpers 12, und andererseits zur Aufnahme der Drehachse 27 des Hohlkörpers 12 und der im Inneren des Hohlkörpers 12 liegenden exzentrisch gelagerten Mitnehmer 28, die von einer in ihrer Lage verstellbaren aber während des Betriebes gestellfesten Kurbelwelle 29 drehbar aufgenommen werden. Damit die Mitnehmer 28 aus dem Inneren des Hohlkörpers 12 durch die Mantelfläche 13 treten können, enthält die Mantelfläche 13 im Bereich der ebenen Umfangsflächen 17 Öffnungen 30 für die Mitnehmer 28, Pro Umfangsfläche 17 sind im dargestellten Ausführungsbeispiel sechs Öffnungen 30, die jeweils in einer Reihe angeordnet sind, vorgesehen, Die Reihe der Öffnungen 30 einer Umfangsfläche 17 können gegenüber der Reihe von Öffnungen 30 einer nachfolgenden Umfangsfläche 17 seitlich versetzt angeordnet sein. Den Öffnungen 30 ist in noch näher zu beschreibender Weise jeweils eine Mitnehmerführung 31 zur Führung der durch die jeweilige Öffnungen 30 greifenden Mitnehmer 28 zugeordnet, wobei auch die Mitnehmerführung 31 Bestandteil des Abstreifelementes 37 sein kann. Schließlich ergibt sich beim Drehen des Hohlkörpers 12 und dabei stillstehender Kurbelwelle 29 eine Relativbewegung zwischen den Mitnehmern 28 und der Mantelfläche 13 des Hohlkörpers 12, bei der die Mitnehmer 30 periodisch aus der Mantelfläche 13 hervortreten und anschließend wieder in diese eintauchen. Der Antrieb der Mitnehmer 28 wird dabei durch den Kontakt der Mitnehmer 28 mit den den Hohlkörper 12 durchsetzenden Öffnungen 30 und/oder den im Laufbereich der Mitnehmer 28 Ausnehmungen 33 aufweisenden Mitnehmerführungen 31 bewirkt. Aufgrund der Exzentrizität der Kurbelwelle 29 zur Drehachse 27 des Hohlkörpers 12 verändert sich durch diesen Antrieb die Winkelorientierung der Mitnehmer 28 in Bezug zur Mantelfläche 13 und gegebenenfalls zur Außenkontur 32 der jeweiligen Mitnehmerführung 31 in einem gewissen Maße, Die Ausnehmungen 33 in den Mittiehmerführungen 24 sind aus folgendem Grund notwendig. Während der Drehung des Hohlkörpers 12 bewegen sich die Mitnehmer 28, wie zuvor angegeben, stets aus der Mantelfläche 13 heraus und ziehen sich wieder in diese zurück. Hierbei durchsetzen sie die Ausnehmungen 33 der Mitnehmerführungen 31 in der ausgefahrenen Stellung und ziehen sich in der zurückgezogenen Stellung vollständig in die jeweilige Ausnehmung 33 der Mitnehmerführung 31 zurück. Die Mitnehmer 28 vollziehen dabei auf ihrem Weg von innen nach außen nicht nur eine radiale Bewegung, sondern im Bereich der Öffnungen 30, durch ihre exzentrische Lagerung zur Drehachse 27, auch eine seitliche Hin- und Herbewegung, in und gegen die Drehrichtung des Hohlkörpers 12, die eine Abweichung von der radialen Bewegung um einen gewissen Betrag eines Winkelbereiches darstellt, wodurch eine Ausnehmung 33 in den Mitnehmerführungen 31 notwendig wird, um ein Klemmen der Mitnehmer 28 zu vermeiden.

Weiter liegen die Mitnehmerführungen 31 einenends bündig an dem jeweiligen Radialsteg 18 an und erstrecken sich untenseitig entlang der jeweils dem Radialsteg 18 nahezu senkrecht benachbarten ebenen Umfangsfläche 17. Dabei umgreifen die Ausnehmungen 33 der Mitnehmeirführungen 31 die jeweils in die Mantelfläche 13 des Hohlkörpers 12 eingelassenen Öffnungen 30, sodass jeder Mitnehmer 28 ungehindert sowohl durch die jeweilige Öffnung 30 und die ihm zugeordnete Mitnehmerführung 31 hindurchtreten kann. Wie bereits beschrieben, weist jede Mitnehmerführung 31 obenseitig eine bogenförmige Außenkontur 32 auf an der entlang die Mitnehmer 28 beim Eintreten in den Hohlkörper 12 das jeweils von ihnen geförderte Erntegut 5 abstreifen, Die bogenförmige Außenkontur 32 ist dabei so beschaffen, dass sich im Einlaufbereich 34 in Drehrichtung 35 der Fördervorrichtung 11 zwischen Mitnehmer 28 und bogenförmiger Außenkontur 32 ein Abstreifwinkel α ergibt, der einen freien Abfluss des Erntegutes ermöglicht, Erfindungsgemäß ist die bogenförmige Außenkontur 32 zugleich so beschaffen, dass sich im Austrittsbereich 36 in Drehrichtung 35 der Fördervorrichtung 11 zwischen Mitnehmer 28 und der bogenförmigen Außenkontur 32 ebenfalls ein Abstreifwinkel β ergibt, der einen freien Abfluss des Erntegutes auch im Austrittsbereich 36 der Mitnehmer 28 sicherstellt. Vorteilhafter Weise sind die jeweiligen Abstreifwinkel α, β so bemessen, dass sie stets größer als der üblicherweise anzunehmende Reibwinkel zwischen dem Material der Mitnehmer 28 und dem zu fördernden Erntegut 5 ist. Dies bedeutet, dass die bogenförmige Außenkontur 32 in Abhängigkeit von dem zu fördernden Erntegut 5 und dem Material der Mitnehmer 28 unterschiedliche Gestalt aufweist, sodass sich materialspezifisch unterschiedlich geformte Mitnehmerführungen 31 ergeben.

### Bezugszeichenliste:

- 1: landwirtschaftliche Arbeitsmaschine
- 2: Mähdrescher
- 3: Getreideschneidwerk
- 4: Schrägförderer
- 5: Erntegutstrom
- 6: Dreschorgan
- 7: Umlenktrommel
- 8: Hordenschüttler
- 9: Trenneinrichtung
- 10: Körner
- 11: Fördervorrichtung
- 12: Hohlkörper
- 13: Mantelfläche
- 14: Erweiterung
- 15: Rechteckfläche
- 16: Rechteckfläche
- 17: Umfangsfläche
- 18: Radialsteg
- 19: innenliegendes Ende
- 20: außenliegendes Ende
- 21: Grundfläche
- 22: Deckfläche
- 23: Scheibe
- 24: Scheibe
- 25: Eckpunkt
- 26: Abstreifkante
- 27: Drehachse
- 28: Mitnehmer
- 29: Kurbelwelle
- 30: Öffnung

- 31: Mitnehmerführung
- 32: Außenkontur
- 33: Ausnehmung
- 34: Einlaufbereich
- 35: Drehrichtung
- 36: Austrittsbereich
- 37: Abstreifelement

- α: Abstreifwinkel
- β: Abstreifwinkel

## Patentansprüche

1. Landwirtschaftliche Arbeitsmaschine (1), insbesondere Mähdrescher (2), mit einer oberhalb eines Hordenschüttlers angeordneten Fördervorrichtung (11) zum Transportieren und Auflockern pflanzlicher Bestandteile, wobei die Fördervorrichtung (11) einen Hohlkörper (12) mit einer im wesentlichen geschlossenen Mantelfläche (13), wenigstens einen Mitnehmer (28) und wenigstens ein Abstreifelement (37) aufweist, wobei wenigstens ein Mitnehmer (28) im Inneren des Hohlkörpers (12) gegenüber dessen Drehachse (27) exzentrisch und drehbar gelagert ist und sich radial beweglich durch eine Mitnehmerführung (31) erstreckt, die an der Mantelfläche (13) angebracht Ist,
**dadurch gekennzeichnet,**
**dass** der Querschnitt des dünnwandigen Hohlkörpers (12) der Fördervorrichtung (11) sternförmig ausgebildet ist, wobei der wenigstens eine Mitnehmer (28) und das diesem zugeordnete Abstreifelement (37) im Windschatten der jeweiligen sternförmigen Erhebung angeordnet ist.

2. Landwirtschaftliche Arbeitsmaschine (1) nach Anspruch 1,
**dadurch gekennzeichnet, dass**
der dünnwandig Hohlkörper (12) von einer Vielzahl zueinander versetzt angeordneter ebener Umfangsflächen (17) gebildet wird und wobei benachbarte Umfangsflächen (17) durch ebene Radialstege (18) miteinander verbunden sind.

3. Landwirtschaftliche Arbeitsmaschine nach Anspruch 2,
**dadurch gekennzeichnet, dass**
die ebenen Radialstege (18) nahezu senkrecht mit zumindest einer benachbarten ebenen Umfangsfläche (17) verbunden sind.

4. Landwirtschaftliche Arbeitsmaschine (1) nach einem der Ansprüche 2 und 3,
**dadurch gekennzeichnet, dass**
die ebenen Umfangsflächen (17) und die Radialstege (18) rechteckig ausgebildet sind und wobei jeweils die Umfangsflächen (17) und die Radialstege (18) gleich groß sind.

5. Landwirtschaftliche Arbeitsmaschine (1) nach einem der vorhergehenden Ansprüche,
**dadurch gekennzeichnet, dass**
jeweils zumindest die Umfangsflächen (17) eine Vielzahl von Öffnungen (30) zum Durchtritt der Mitnehmer (28) aufweisen.

6. Landwirtschaftliche Arbeitsmaschine (1) nach einem der vorhergehenden Ansprüche,
**dadurch gekennzeichnet, dass**
die Öffnungen (30) jeweils in einer Reihe in die jeweilige Umfangsfläche (17) eingelassen sind.

7. Landwirtschaftliche Arbeitsmaschine (1) nach einem der vorhergehenden Ansprüche,
**dadurch gekennzeichnet, dass**
auf der jeweiligen Umfangsfläche (17) wenigstens eine Mitnehmerführung (31) im Bereich zwischen dem benachbarten und nahezu senkrecht angeordneten Radialsteg (18) und der Öffnung (30) angeordnet ist und wobei sich die Mitnehmerführung (31) vom Radialsteg (18) über die Öffnung (30) hinweg erstreckt.

8. Landwirtschaftliche Arbeitsmaschine (1) nach einem der vorhergehenden Ansprüche, **dadurch gekennzeichnet, dass**
die Mitnehmerführung (31) eine bogenförmige Außenkontur (32) aufweist.

9. Landwirtschaftliche Arbeitsmaschine (1) nach Anspruch 8,
**dadurch gekennzeichnet, dass**
die bogenförmige Außenkontur (32) so beschaffen ist, dass sich im Einlaufbereich (34) in Drehrichtung (35) der Fördervorrichtung (11) zwischen Mitnehmer (28) und bogenförmiger Außenkontur (32) ein Abstreifwinkel (α) ergibt, der einen freien Abfluss des Erntegutes (5) ermöglicht.

10. Landwirtschaftliche Arbeitsmaschine (1) nach wenigstens einem der Ansprüche 8 oder 9,
**dadurch gekennzeichnet, dass**
die bogenförmige Außenkontur (32) so beschaffen ist, dass sich im Austrittsbereich (36) in Drehrichtung (35) der Fördervorrichtung (11) zwischen Mitnehmer (28) und bogenförmiger Außenkontur (32) ein Abstreifwinkel (β) ergibt, der einen freien Abfluss des Erntegutes (5) ermöglicht.

11. Landwirtschaftliche Arbeitsmaschine (1) nach einem der vorhergehenden Ansprüche,
**dadurch gekennzeichnet, dass**
die Umfangsfläche (17) mit dem ihr zugeordneten Radialsteg (18) eine sternförmige Erweiterung (14) bildet in dessen Eckpunkt (25) zwischen Mitnehmerführung (31) und vorauseilender Umfangsfläche (17) eine Abstreifkante (26) verläuft.

12. Landwirtschaftliche Arbeitsmaschine (1) nach einem der vorhergehenden Ansprüche,
**dadurch gekennzeichnet, dass**
die Mitnehmerführung (31) von einer Ausnehmung (33) zur Führung eines Mitnehmers (28) durchsetzt wird.

13. Landwirtschaftliche Arbeitsmaschine (1) nach einem der vorhergehenden Ansprüche,
**dadurch gekennzeichnet, dass**
die Grundfläche (21) und die Deckfläche (22) des Hohlkörpers (12) jeweils von einer kreisförmigen Scheibe (23, 24) verschlossen wird.

14. Landwirtschaftliche Arbeitsmaschine (1) nach Anspruch 13,
**dadurch gekennzeichet, dass**
die kreisförmig Scheibe (23, 24) im Durchmesser mit den außen liegenden Eckpunkte (25) korrespondiert.

## Claims

1. An agricultural working machine (1), in particular a combine harvester (2), comprising a conveyor device (11) arranged above a straw walker for transporting and loosening up plant constituents, wherein the conveyor device (11) has a hollow body (12) with a substantially closed peripheral surface (13), at least one entrainment member (28) and at least one stripping element (37), wherein at least one entrainment member (28) is mounted in the interior of the hollow body (12) rotatably and eccentrically with respect to the axis of rotation (27) of the hollow body and extends radially movably through an entrainment member guide (31) mounted to the peripheral surface (13),
**characterised in that**
the cross-section of the thin-walled hollow body (12) of the conveyor device (11) is of a star-shaped configuration, wherein the at least one entrainment member (28) and the stripping element (37) associated therewith is arranged in the slipstream of the respective star-shaped raised portion.

2. An agricultural working machine (1) according to claim 1 **characterised in that** the thin-walled hollow body (12) is formed by a plurality of flat peripheral surfaces (17) arranged in mutually displaced relationship and wherein adjacent peripheral surfaces (17) are connected together by flat radial limbs (18).

3. An agricultural working machine according to claim 2 **characterised in that** the flat radial limbs (18) are connected almost perpendicularly to at least one adjacent flat peripheral surface (17).

4. An agricultural working machine (1) according to one of claims 2 and 3 **characterised in that** the flat peripheral surfaces (17) and the radial limbs (18) are rectangular and wherein the respective peripheral surfaces (17) and radial limbs (18) are of equal size.

5. An agricultural working machine (1) according to one of the preceding claims **characterised in that** at least the peripheral surfaces (17) respectively have a plurality of openings (30) for the entrainment members (28) to pass through.

6. An agricultural working machine (1) according to one of the preceding claims **characterised in that** the openings (30) are respectively let in a row into the respective peripheral surface (17).

7. An agricultural working machine (1) according to one of the preceding claims **characterised in that** arranged on the respective peripheral surface (17) is at least one entrainment member guide (31) in the region between the adjacent and almost perpendicularly arranged radial limb (18) and the opening (30) and wherein the entrainment member guide (31) extends from the radial limb (18) beyond the opening (30).

8. An agricultural working machine (1) according to one of the preceding claims **characterised in that** the entrainment member guide (31) is of an arcuate outside contour (32).

9. An agricultural working machine (1) according to claim 8 **characterised in that** the arcuate outside contour (32) is such that in the intake region (34) in the direction of rotation (35) of the conveyor device (11) between the entrainment member (28) and the arcuate outside contour (32) there is a stripping angle (α) which permits the crop material (5) to freely flow away.

10. An agricultural working machine (1) according to at least one of claims 8 and 9 **characterised in that** the arcuate outside contour (32) is such that in the outlet region (36) in the direction of rotation (35) of the conveyor device (11) between the entrainment member (28) and the arcuate outside contour (32) there is a stripping angle (β) which permits the crop material (5) to freely flow away.

11. An agricultural working machine (1) according to one of the preceding claims **characterised in that** the peripheral surface (17) with the radial limb (18) associated therewith forms a star-shaped enlargement (14), in whose corner point (25) a stripping edge (26) extends between the entrainment member guide (31) and the leading peripheral surface (17).

12. An agricultural working machine (1) according to one of the preceding claims **characterised in that** the entrainment member guide (31) has an opening (33) therethrough for guiding an entrainment member (28).

13. An agricultural working machine (1) according to one of the preceding claims **characterised in that** the base surface (21) and the cover surface (22) of the hollow body (12) are respectively closed by a circular disc (23, 24).

14. An agricultural working machine (1) according to claim 13 **characterised in that** the circular disc (23, 24) corresponds in diameter to the outwardly disposed corner points (25).

## Revendications

1. Machine agricole (1), en particulier moissonneuse-batteuse (2), pourvue d'un dispositif de transport (11) disposé au-dessus d'un secoueur à claies pour transporter et décompacter des composants végétaux, lequel dispositif de transport (11) comporte un corps creux (12) ayant une surface extérieure (13) essentiellement fermée, au moins un élément d'entraînement (28) et au moins un élément racleur (37), au moins un élément d'entraînement (28) à l'intérieur du corps creux (12) étant monté de manière excentrique et tournante par rapport à son axe de rotation (27) et s'étendant de manière mobile radialement à travers un guide d'élément d'entraînement (31) qui est disposé sur la surface extérieure (13), **caractérisée en ce que** la coupe transversale du corps creux (12) à paroi mince du dispositif de transport (11) est conformée en étoile, ledit au moins un élément d'entraînement (28) et l'élément racleur (37) associés à celui-ci étant disposés à l'abri de la surélévation en étoile respective.

2. Machine agricole (1) selon la revendication 1, **caractérisée en ce que** le corps creux à paroi mince (12) est formé par une pluralité de surfaces périphériques planes (17) décalées les unes par rapport aux autres, des surfaces périphériques (17) adjacentes étant reliées entre elles par des branches radiales planes (18).

3. Machine agricole selon la revendication 2, **caractérisée en ce que** les branches radiales planes (18) sont reliées de manière quasi perpendiculaire à au moins une surface périphérique plane (17) adjacente.

4. Machine agricole (1) selon une des revendications 2 et 3, **caractérisée en ce que** les surfaces périphériques planes (17) et les branches radiales (18) sont de forme rectangulaire, les surfaces périphériques (17) et les branches radiales (18) étant respectivement de la même taille.

5. Machine agricole (1) selon une des revendications précédentes, **caractérisée en ce qu'**au moins chacune des surfaces périphériques (17) comporte une pluralité d'ouvertures (30) pour le passage des éléments d'entraînement (28).

6. Machine agricole (1) selon une des revendications précédentes, **caractérisée en ce que** les ouvertures (30) sont ménagées à chaque fois sur une rangée dans la surface périphérique (17) respective.

7. Machine agricole (1) selon une des revendications précédentes, **caractérisée en ce qu'**au moins un guide d'élément d'entraînement (31) est disposé sur la surface périphérique (17) respective dans la zone entre la branche radiale (18) adjacente et quasi perpendiculaire et l'ouverture (30), le guide d'élément d'entraînement (31) s'étendant, depuis la branche radiale (18), au-delà de l'ouverture (30).

8. Machine agricole (1) selon une des revendications précédentes, **caractérisée en ce que** le guide d'élément d'entraînement (31) présente un contour extérieur arqué (32).

9. Machine agricole (1) selon la revendication 8, **caractérisée en ce que** le contour extérieur arqué (32) est conçu de manière à produire, dans la zone d'entrée (34) dans le sens de rotation (35) du dispositif de transport (11), entre élément d'entraînement (28) et contour extérieur arqué (32), un angle de raclage (α) qui permet un écoulement libre du produit de récolte (5).

10. Machine agricole (1) selon au moins une des revendications 8 ou 9, **caractérisée en ce que** le contour extérieur arqué (32) est conçu de manière à produire, dans la zone de sortie (36) dans le sens de rotation (35) du dispositif de transport (11), entre élément d'entraînement (28) et contour extérieur arqué (32), un angle de raclage (β) qui permet un écoulement libre du produit de récolte (5).

11. Machine agricole (1) selon une des revendications précédentes, **caractérisée en ce que** la surface périphérique (17) forme avec la branche radiale (18) qui lui est associée un élargissement en étoile (14) au sommet (25) duquel s'étend une arête de raclage (26) entre guide d'élément d'entraînement (31) et surface périphérique antérieure (17).

12. Machine agricole (1) selon une des revendications précédentes, **caractérisée en ce que** le guide d'élément d'entraînement (31) est traversé par un évidement (33) servant au guidage d'un élément d'entraînement (28).

13. Machine agricole (1) selon une des revendications précédentes, **caractérisée en ce que** la surface de base (21) et la surface de recouvrement (22) du corps creux (12) sont fermées chacune par un disque circulaire (23, 24).

14. Machine agricole (1) selon la revendication 13, **caractérisée en ce que** le disque circulaire (23, 24) correspond par son diamètre aux sommets (25) extérieurs.
